# EUROPEAN PATENT APPLICATION

(11) **EP 2 763 285 A2**
(43) Date of publication of application: **06.08.2014**
(21) Application number: 14151133.7
(22) Date of filing: 14.01.2014
(51) Int. Cl.: H02K 1/27

(54) **Permanent magnet embedded type rotor for rotating electrical machine and rotating electrical machine having permanent magnet embedded type rotor**

(30) Priority: 30.01.2013 JP 2013015278
(71) Applicant: KABUSHIKI KAISHA TOYOTA JIDOSHOKKI, Kariya-shi, Aichi-ken 448-8671 (JP)
(72) Inventor: Kagami, Masanao, Aichi-ken, 448-8671 (JP); Nakane, Yoshiyuki, Aichi-ken, 448-8671 (JP); Mitsuda, Satoru, Aichi-ken, 448-8671 (JP); Suzuki, Noriyuki, Aichi-ken, 448-8671 (JP)
(74) Representative: HOFFMANN EITLE

(57) **Abstract**

A permanent magnet embedded type rotating electrical machine includes a rotor includes a rotor core formed by a plurality of laminated magnetic steel plates and a plurality of permanent magnets and a stator. Each magnetic steel plate has a plurality of pairs of magnet holes, pairs of joining portions and peninsula portions. The magnet holes of each pair are disposed at positions adjacent to an outer periphery of the magnetic steel plate so as to form a V-shape that is divergent toward the outer periphery. The joining portion is configured to connect the magnet hole with a circumference of the peninsula portion. A distance between a center of the rotor core and at least one of a pair of ends of the circumference of the peninsula portion is smaller than a distance between the center and an intersection of a d-axis of the rotor and the circumference.

## Description

### BACKGROUND OF THE INVENTION

The present invention relates to a rotor for a permanent magnet embedded type rotating electrical machine including a rotor core formed of a plurality of laminated magnetic steel plates and a plurality of permanent magnets embedded in the rotor core in the axial direction thereof and also to the permanent magnet embedded type rotating electrical machine having the rotor or an interior permanent magnet motor (IPM motor).

Generally, a rotor for a permanent magnet embedded type rotating electrical machine includes a rotor core formed of a plurality of laminated magnetic steel plates and a plurality of permanent magnets embedded in the rotor core in the axial direction thereof. Each magnetic steel plate has formed therethrough a plurality of magnet holes and the rotor core made of the laminated magnetic steel plates has formed therethrough a plurality of magnet receiving holes extending in the axial direction thereof.

In the permanent magnet embedded type rotating electrical machine, the torque to rotate the rotor is developed by the magnetic flux generated by the permanent magnets of the rotor and interacting with the magnetic poles of a stator disposed radially outward of the rotor. When the magnet receiving holes are formed in the rotor core such that the rotor core surrounds all around the magnet receiving holes, magnetic flux extending from the north pole of the permanent magnet leaks to the south pole of the permanent magnet through the rotor core surrounding the magnet receiving hole. The magnetic flux leakage does not contribute to the generation of the torque of the rotor and, therefore, the output of the permanent magnet embedded type rotating electrical machine is decreased, accordingly.

The Japanese Patent Application Publication No. 2004-104962 discloses a permanent magnet embedded type rotating electrical machine wherein the magnet receiving holes in the rotor core are formed so as to be opened at the outer periphery of the rotor core thereby to prevent the magnetic flux leakage and the decrease of the output of the permanent magnet embedded type rotating electrical machine (refer to Figs. 11 and 12).

In the permanent magnet embedded type rotating electric machine according to this Publication, the leakage of the magnetic flux generated by the permanent magnets is prevented and, therefore, the magnetic flux generated by the permanent magnets interacts effectively with the magnetic poles of the stator. Therefore, the torque development of the permanent magnet embedded type rotating electric machine is improved over the conventional rotating electric machine. Magnetic flux density at the opening of the magnetic receiving hole becomes extremely small with an increase of the magnetic attraction force of the rotor. The difference in the variations of magnetic flux between the opening of the magnetic receiving hole and the rest of the magnetic receiving hole is increased during the operation of the rotating electrical machine. Therefore, cogging torque of the rotating electrical machine is increased, with the result that vibration and torque ripple in the permanent magnet embedded type rotating electrical machine may be increased.

The present invention which has been made in light of the above drawbacks is directed to providing a rotor for a permanent magnet embedded type rotating electrical machine which prevents the magnetic flux leakage and a permanent magnet embedded type rotating electrical machine having such rotor.

### SUMMARY OF THE INVENTION

In accordance with the present invention, a permanent magnet embedded type rotating electrical machine includes a rotary shaft, a rotor and a stator. The rotor includes a rotor core formed by a plurality of laminated magnetic steel plates and a plurality of permanent magnets embedded in the rotor core in an axial direction of the rotary shaft. The stator has a coil. Each magnetic steel plate has a plurality of pairs of magnet holes, a plurality of pairs of joining portions and a plurality of peninsula portions. The magnet holes of each pair are disposed at positions adjacent to an outer periphery of the magnetic steel plate so as to form a V-shape that is divergent toward the outer periphery of the magnetic steel plate. The joining portion is configured to connect the magnet hole with a circumference of the peninsula portion and the peninsula portion is formed surrounded by a pair of the magnet holes and a pair of the joining portions. A distance between a center of the rotor core and at least one of a pair of ends of the circumference of the peninsula portion is smaller than a distance between the center of the rotor core and an intersection of a d-axis of the rotor and the circumference of the peninsula portion.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
Fig. 1 is a schematic sectional view showing a permanent magnet embedded type rotating electrical machine according to a first preferred embodiment of the present invention;
Fig. 2 is a plan view showing a rotor of the permanent magnet embedded type rotating electrical machine of Fig. 1;
Fig. 3 is a partially enlarged plan view showing the rotor of the permanent magnet embedded type rotating electrical machine of Fig. 1;
Fig. 4 is a plan view showing a magnetic steel plate of the rotor of the permanent magnet embedded type rotating electrical machine of Fig. 1;
Fig. 5 is a side view showing the rotor of the permanent magnet embedded type rotating electrical machine of Fig. 1, and
Fig. 6 is a partially enlarged plan view showing a rotor of a permanent magnet embedded type rotating electrical machine according to a second preferred embodiment of the present invention.

### DETAILED DESCRIPTION OF THE PREFERRED EMBODIMENTS

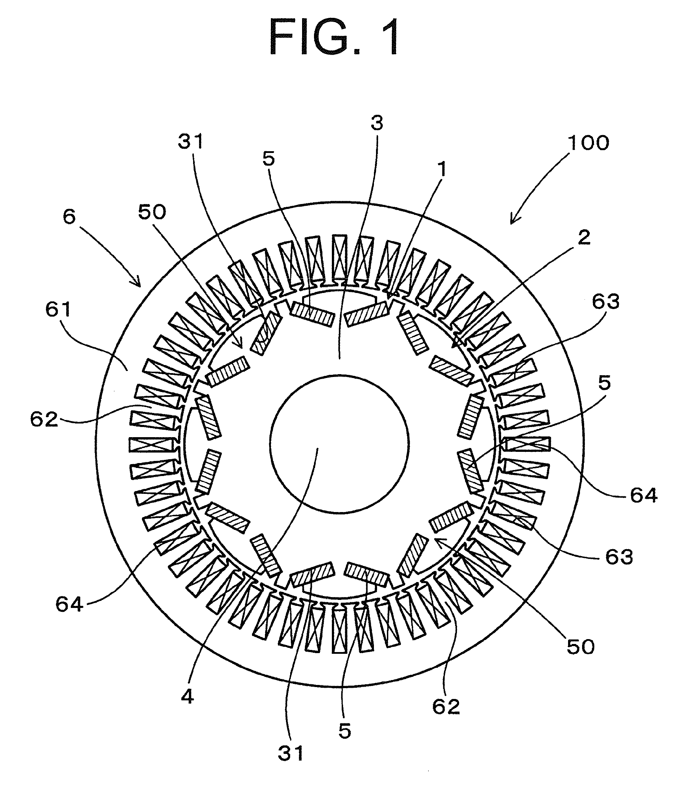

The following will describe a permanent magnet embedded type rotating electrical machine according to a first preferred embodiment with reference to Figs. 1 through 5. Referring to Fig. 1, reference numeral 100 designates a permanent magnet embedded type rotating electrical machine (hereinafter referred to simply as "rotating electrical machine"). The rotating electrical machine 100 has a rotary shaft 4, a rotor 1 and a stator 6. The rotor 1 includes a rotor core 2 mounted on the rotary shaft 4 for rotation therewith and formed by a plurality of stacked and laminated magnetic steel plates 3 and a plurality of permanent magnets 5 embedded in the rotor core 2 in the axial direction of the rotary shaft 4. The stator 6 has a coil. Each magnetic steel plate 3 has formed therein a plurality of pairs of magnet holes 31, a plurality of pairs of joining portions 32 and peninsula portions 33. The magnet holes 31 of each pair are disposed at positions adjacent to the outer periphery of the magnetic steel plate 3 so as to form a V-shape that is divergent toward the outer periphery and to be opened outside of the magnetic steel plate 3. The joining portion 32 is configured to connect the magnet hole 31 with its corresponding circumference 301 of the peninsula portion 33. The peninsula portion 33 is formed surrounded by the circumference 301, a pair of its adjacent magnet holes 31 and a pair of the joining portions 32.

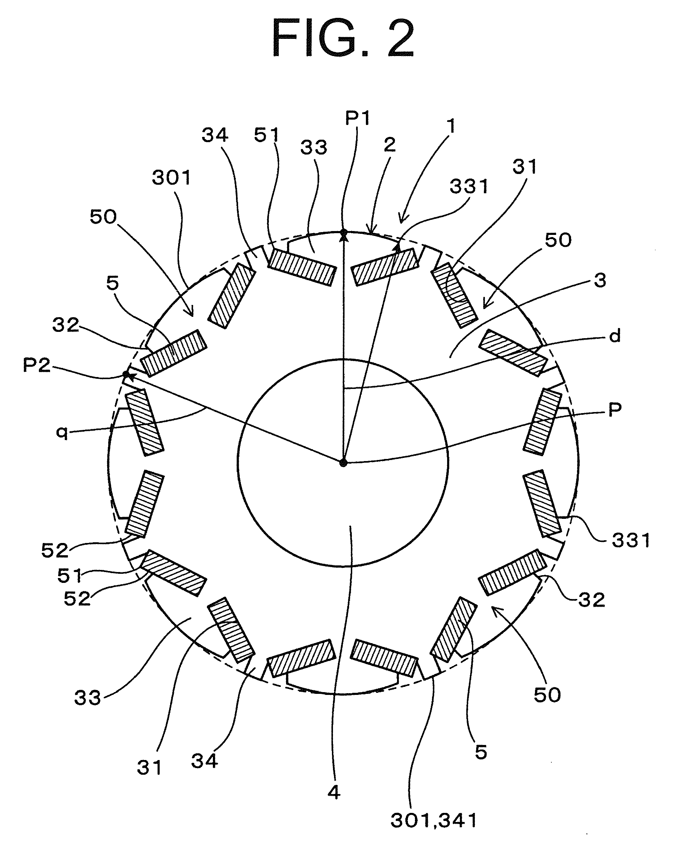

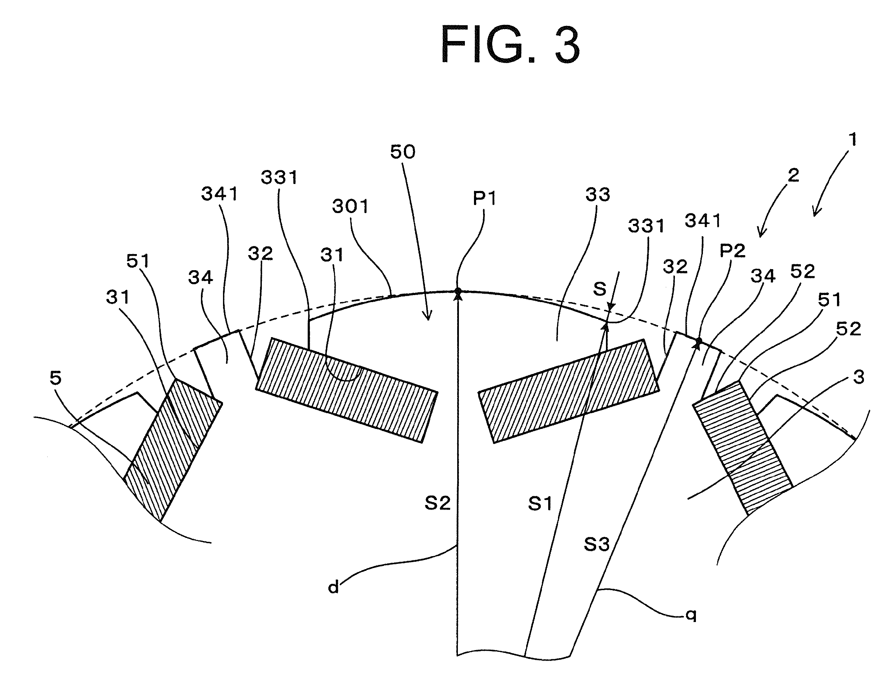

Referring to Figs. 2 and 3, the circumference 301 of the peninsula portion 33 is formed with such a curve that the distance S1 between one of ends 331 of the circumference 301 of the peninsula portion 33 and the center P of the rotor core 2 is smaller than the distance S2 between the center P and an intersection P1 of the d-axis and the circumference 301.

As shown in Fig. 1, the rotating electrical machine 100 of the present embodiment includes the rotor 1 and the stator 6 disposed radially outward of the rotor 1.

The stator 6 includes an annular stator core 61. The stator core 61 has formed along the entire inner periphery thereof a plurality of teeth 62, a plurality of slots 63 formed between any two adjacent teeth 62 and a coil 64 wound in the slots 63. Each coil 64 is positioned such that the axial direction of the coil 64 extends in the radial direction of the rotor 1 and parallel to the d-axis of the permanent magnet pairs 50 that extends in the direction of the magnetic flux generated by the permanent magnet pairs 50. The rotating electrical machine 100 of the present embodiment is usable in an electric vehicle or a hybrid vehicle.

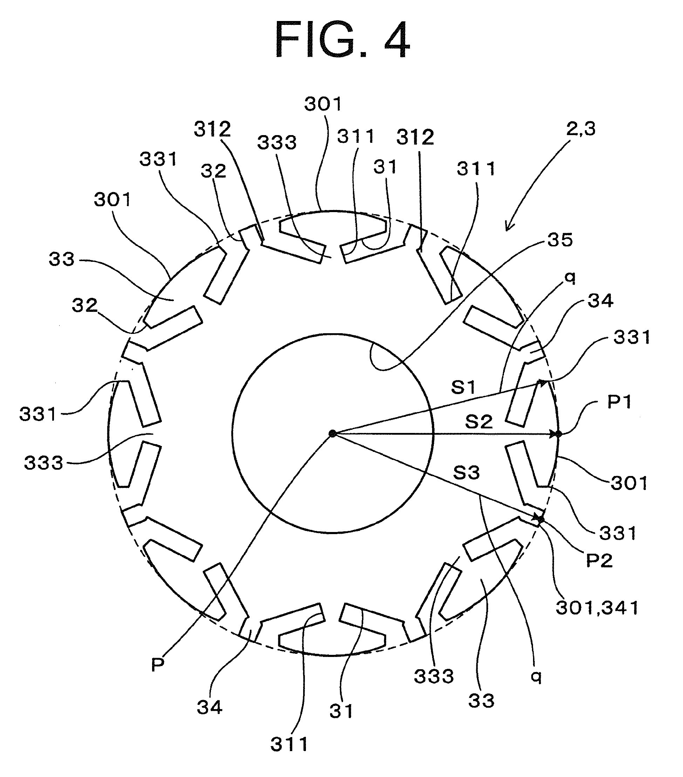

As shown in Figs. 2 and 3, the rotor 1 includes the rotor core 2 formed by a plurality of laminated magnetic steel plates 3 and a plurality of the permanent magnets 5 inserted in the rotor core 2 in the axial direction thereof. Referring to Fig. 4, the magnetic steel plate 3 having a disk shape has formed therethrough a plurality of magnet holes 31 for the permanent magnets 5 (refer to Fig. 2), a plurality of the joining portions 32 connecting the magnet holes 31 with the circumferences 301, respectively, a plurality of the peninsula portions 33 surrounded by a pair of the magnet holes 31 and a pair of the joining portions 32 and a plurality of projections 34 extending outwardly between any two adjacent peninsula portions 33. The magnetic steel plate 3 has formed therethrough a shaft hole 35 having a circular shape at the center thereof for inserting therethrough the rotary shaft 4.

As shown in Fig. 4, the paired magnet holes 31 are disposed with the inner closed ends 311 thereof located close to each other and extending away from each other toward the outer periphery of the magnetic steel plate 3 or toward the outer open ends 312 of the magnet holes 31. The magnetic steel plate 3 has eight pairs of the magnet holes 31, totaling sixteen magnet holes 31, wherein eight pairs of magnetic poles are formed rotationally symmetrical with respect to the rotation center of the rotor 1.

As shown in Fig. 4, the joining portion 32 connects the inside of the magnet hole 31 with the circumferences 301 at the outer open end 312 of the magnet hole 31. As shown in Figs. 2 and 3, the magnet hole 31 is connected to the joining portion 32 which is formed to be opened outwardly at the outer periphery of the magnetic steel plate 3 thereby to prevent short circuit surrounding the permanent magnets 5 in the rotor core 2 (magnetic flux leakage). The magnet holes 31 of all the magnetic steel plates 3 forming the rotor core 2 are opened outwardly. Thus, magnetic flux leakage in the magnetic steel plates 3 may be prevented.

As shown in Fig. 4, the peninsula portion 33 formed between the paired magnet holes 31 has a fan shape and a bridge portion 333 formed between the inner closed ends 311 of the paired magnet holes 31. As shown in Figs. 3 and 4, the circumference 301 of the peninsula portion 33 is formed with such an arcuate shape that the distance S1 between the center P of the rotor core 2 and one of the ends 331 of the circumference 301 is smaller than the distance S2 between the center P and the intersection P1 of the d-axis and the circumference 301. That is, the circumferences 301 of the peninsula portion 33 is formed with such an arcuate shape that the distance from the center P to the circumference 301 is gradually reduced from the intersection P1 toward the ends 331.

According to this preferred embodiment, the difference S between the distances S1 and S2 is about 0.5 mm. It is preferable that the difference S should be in the range from 0.1 mm to 0.6 mm. If the difference S is outside the above range, cogging torque of the rotating electrical machine 100 may be reduced. When the difference S is within the above range, cogging torque of the rotating electrical machine 100 may be reduced and simultaneously rotation torque may be accomplished easily.

Each projection 34 located between any two adjacent peninsula portions 33 extends radially outward and has an outer edge 341. The outer edge 341 of the projection 34 has an arcuate shape centered on the center P and coincides with the outer periphery of the magnetic steel plate 3 indicated by dashed line. The distance S3 between the center P and an intersection P2 of the q-axis and the outer edge 341 of the projection 34 is substantially the same as the distance S2 between the center P and the intersection P1 of the peninsula portion 33.

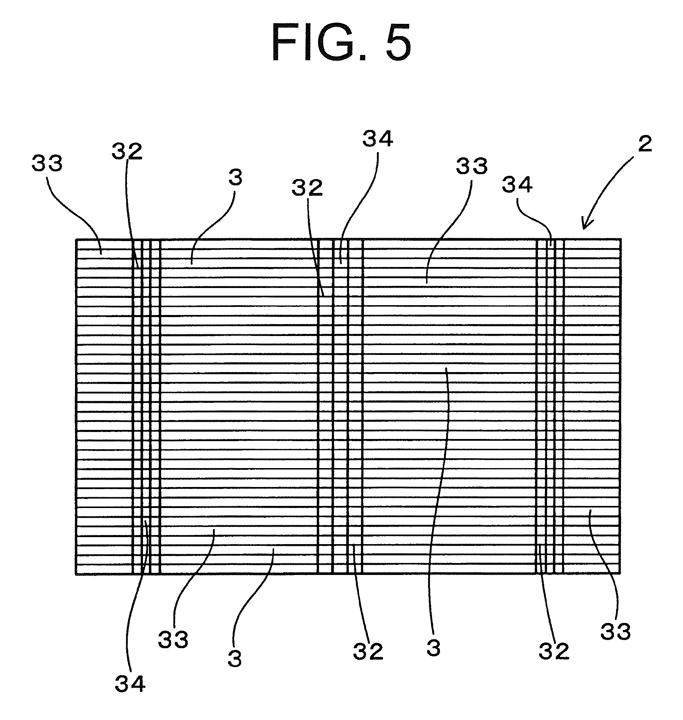

Referring to Fig. 5, the rotor core 2 is formed of a plurality of the magnetic steel plates 3 which are laminated together and fixed by a fixing member (not shown). The rotor core 2 has therein a plurality of the magnet receiving holes each formed by a plurality of the magnet holes 31 aligned when the magnetic steel plates 3 are laminated together. The permanent magnets 5 are inserted in the magnet receiving holes, thus the permanent magnets 5 being embedded in the rotor core 2. Each magnet receiving hole is formed by the laminated magnetic steel plates 3 in the axial direction thereof and the shape and the position of the magnet receiving hole is the same as the shape and the position of the magnetic steel plate 3 as seen in the axial direction thereof.

As shown in Figs. 2 and 3, a plurality of the permanent magnets 5 are embedded in a plurality of the magnet receiving holes of the rotor core 2, respectively. The permanent magnet 5 has a rectangular shape as seen in the axial direction of the rotor core 2 and the surfaces of the permanent magnet 5 formed by the long side of the rectangular shape are the magnetic pole surfaces. The permanent magnet 5 has a rectangular parallelepiped shape having a length that is substantially the same as the axial length of the rotor core 2 and is formed integrally with the rotor core 2. The permanent magnets 5 are located such that a pair of magnetic poles is formed by each pair of the adjacent permanent magnets 5.

As shown in Figs. 2 and 3, the permanent magnets 5 constituting the pair are located such that the magnetic pole surfaces of the paired permanent magnets 5 having the same magnetic pole (N-pole or S-pole) face outward. Eight pairs of the permanent magnets 5 (each pair being designated by 50) are located in the rotor core 2 along the circumferential direction thereof. Additionally, the permanent magnet pairs 50 of eight pairs are disposed at an equiangular interval and in such an arrangement that the magnetic pole surfaces of any two adjacent permanent magnets 5 of two different pairs facing in the same outward or inward direction are of different poles (N-pole and S-pole). As shown in Fig. 2, the edge 51 of each permanent magnet 5 and part of the side surface 52 adjacent to the edge 51 are exposed to the joining portion 32.

The following will describe advantageous effects of the first preferred embodiment according to the present invention. In the rotating electrical machine 100, the ends 331 of the circumference 301 is located radially inward of the intersection P1. In the rotor 1, the magnetic flux density at the end 331 is decreased because of the increased distance between the end 331 and the stator 6. During the operation of the rotating electric machine 100, the variation of the magnetic flux between the joining portion 32 and the peninsula portion 33 having higher magnetic flux density than the joining portion 32 may be reduced, with the result that the cogging torque of the rotating electrical machine 100 may be reduced and also vibration and torque ripple may be reduced.

The circumference 301 of the peninsula portion 33 is formed with such a curve that the distance between the center P and the circumference 301 is gradually reduced from the intersection P1 toward the ends 331. Therefore, the magnetic flux density is changed moderately from the joining portion 32 toward the d-axis, so that the cogging torque of the rotating electrical machine 100 may be further reduced.

In the rotor core 2 wherein the distances S1 between the center P and a pair of the ends 331 are smaller than the distance S2 between the center P and the intersection P1, the magnetic flux density between the stator 6 and the opposite ends 331 of the peninsula portion 33 may be reduced. Therefore, the cogging torque of the rotating electrical machine 100 may be further reduced in the operation of the rotating electrical machine 100 in either direction.

In the rotor core 2, the magnetic steel plate 3 has a plurality of the projections 34 located between any two adjacent peninsula portions 33 and extending outwardly, and the distance S3 between an intersection P2 of the q-axis and the outer edge 341 of the projection 34 is substantially the same as the distance S2 between the center P and the intersection P1. Therefore, the q-axis inductance of the rotor 1 may be decreased and the reluctance torque of the rotor 1 may be increased, with the result that the torque of the rotating electric machine 100 may be increased without changing magnetic flux in the rotor 1 rapidly.

The edge 51 of the permanent magnet 5 and part of the side surface 52 adjacent to the edge 51 are exposed to the joining portion 32, which reduces the contacting area between the permanent magnet 5 and the rotor core 2. Therefore, the moment locally acting on the rotor core 2 in accordance with the attraction and repulsion of the permanent magnet 5 may be reduced thereby to protect the rotor core 2 from deformation.

The rotating electric machine 100 may reduce the cogging torque while reducing the magnetic flux leakage to improve the torque of the rotating electric machine 100.

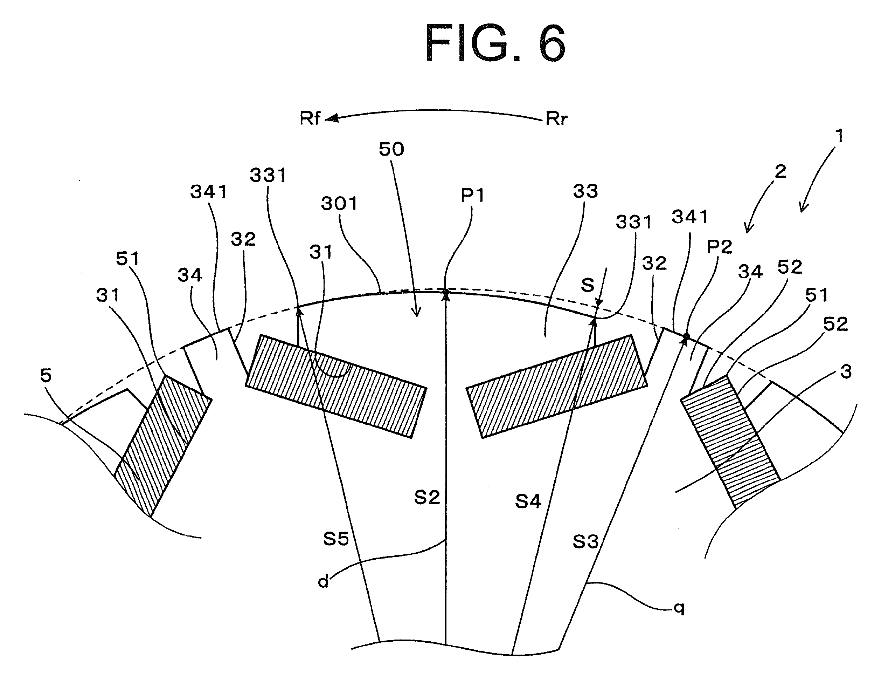

The following will describe a second preferred embodiment of the present invention. The second preferred embodiment differs from the first preferred embodiment in that the shape of the magnetic steel plate 3 of the rotor core 2 of the rotating electrical machine 100 is modified. Referring to Fig. 6 showing the second preferred embodiment, the distance S4 between the center P (not shown in the drawing) and the end 331 on the rear side or the trailing side Rr of the circumference 301 of the peninsula portion 33 as seen in the rotating direction of the rotor core 2 is smaller than the distance S5 between the center P and the end 331 on the front side or the leading side Rf of the circumference 301 of the peninsula portion 33. The rest of the structure of the rotor core 2 is substantially the same as the first preferred embodiment.

According to the rotating electrical machine 100 of the second preferred embodiment, the magnetic flux density between the end 331 on the leading side Rf and the stator 6 may be increased while the magnetic flux density between the end 331 on the trailing side Rr and the stator 6 may be reduced. Thus, the attraction acting on the end 331 on the leading side Rf is larger than that acting on the end 331 on the trailing side Rr and, therefore, the cogging torque may be reduced and the rotation torque may be increased. The advantageous effects of the first preferred embodiment are also obtained.

## Claims

1. A permanent magnet embedded type rotating electrical machine (100) comprising:
a rotary shaft (4);
a rotor (1) including:
a rotor core (2) formed by a plurality of laminated magnetic steel plates (3); and
a plurality of permanent magnets (5) embedded in the rotor core (2) in an axial direction of the rotary shaft (4); and
a stator (6) having a coil (64),
**characterized in that** each magnetic steel plate (3) has a plurality of pairs of magnet holes (31), a plurality of pairs of joining portions (32) and a plurality of peninsula portions (33), the magnet holes (31) of each pair are disposed at positions adjacent to an outer periphery of the magnetic steel plate (3) so as to form a V-shape that is divergent toward the outer periphery of the magnetic steel plate (3), the joining portion (32) is configured to connect the magnet hole (31) with a circumference (301) of the peninsula portion (33) and the peninsula portion (33) is formed surrounded by a pair of the magnet holes (31) and a pair of the joining portions (32), and
**in that** a distance (S1, S4, S5) between a center (P) of the rotor core (2) and at least one of a pair of ends (331) of the circumference (301) of the peninsula portion (33) is smaller than a distance (S2) between the center (P) of the rotor core (2) and an intersection (P1) of a d-axis of the rotor (1) and the circumference (301) of the peninsula portion (33).

2. The permanent magnet embedded type rotating electrical machine (100) according to claim 1, **characterized in that** the distances (S1) between the center (P) of the rotor core (2) and a pair of the ends (331) of the circumference (301) of the peninsula portion (33) are smaller than the distance (S2) between the center (P) of the rotor core (2) and the intersection (P1) of the d-axis of the rotor (1) and the circumference (301) of the peninsula portion (33).

3. The permanent magnet embedded type rotating electrical machine (100) according to claim 1 or 2, **characterized in that** the distance (S4) between the center (P) of the rotor core (2) and the end (331) on a trailing side (Rr) of the circumference (301) of the peninsula portion (33) as seen in the rotating direction of the rotor core (2) is smaller than the distance (S5) between the center (P) of the rotor core (2) and the end (331) on a leading side (Rf) of the circumference (301) of the peninsula portion (33).

4. The permanent magnet embedded type rotating electrical machine (100) according to any one of claims 1 through 3, **characterized in that** the magnetic steel plate (3) has a plurality of projections (34) extending outwardly between any adjacent peninsula portions (33), and
**in that** a distance (S3) between the center (P) of the rotor core (2) and an intersection (P2) of a q-axis of the rotor (1) and an outer edge (341) of the projection (34) is the same as the distance (S2) between the center (P) of the rotor core (2) and the intersection (P1) of the d-axis of the rotor (1) and the circumference (301) of the peninsula portion (33).

5. The permanent magnet embedded type rotating electrical machine (100) according to any one of claims 1 through 4, **characterized in that** at least an edge (51) of the permanent magnet (5) closer to the outer periphery of the magnetic steel plate (3) is exposed to the joining portion (32).
